# EUROPÄISCHE PATENTSCHRIFT

(11) **EP 0 672 998 B1**
(45) Veröffentlichungstag und Bekanntmachung des Hinweises auf die Patenterteilung: **06.12.2000**
(21) Anmeldenummer: 95103038.6
(22) Anmeldetag: 03.03.1995
(51) Int. Cl.: G06K 19/00

(54) **Verfahren zur Herstellung von durch Spuren einer Hell-Dunkel-feldverteilung codierten Ausweiskarten**
Method for the production of ID-carts with tracks of black and white field distributions
Procédé pour la fabrication des cartes d'identité codées par la distribution des traces claires et foncées

(30) Priorität: 16.03.1994 DE 4408917
(43) Veröffentlichungstag der Anmeldung: 20.09.1995
(73) Patentinhaber: Interflex Datensysteme GmbH, D-70567 Stuttgart (DE)
(72) Erfinder: Kaufmann, Johannes, D-72362 Nusplingen (DE); Häring, Günther, D-78591 Durchhausen (DE); Vosseler, Jürgen, D-78166 Donaueschingen (DE)
(74) Vertreter: Otte, Peter, Dipl.-Ing.

(56) Entgegenhaltungen:
- AT-B- 378 275
- US-A- 4 544 836
- US-A- 4 605 846
- US-A- 4 683 371

## Beschreibung

### Stand der Technik

Es sind eine Vielzabl von Zugangskontrollen zu Gebäuden, Ausweiskarten, Schlüssel in Kartenform u. dgl. bekannt, bei denen durch eine üblicherweise mittels Infrarot lesbaren Hell-Dunkelfeldverteilung codierte Informationen so ausgewertet werden, daß sich hierdurch beispielsweise der legitimierte Zugang zu einem Gebäude, zum Auslesen und Abrufen von verschiedenen Zeitkontenständen oder Bankkontoständen und persönlichen Daten eines Kontostandes, zur Bedienung eines Personalcomputers oder sonstiger Gelegenheiten und Tätigkeiten ergibt, die auch durch die vorliegende Erfindung realisiert sind.

Üblicherweise können solche Zugangsmittel, Ausweise von beliebiger Form und beliebig verteilten lesbaren Hell-Dunkelfeld-Spuren sein, die im folgenden sämtlich durch den Begriff der Ausweiskarte subsumiert sind. Solche Ausweiskarten werden von einer Vielzahl von Personen getragen und, wenn man hier stellvertretend für alle anderen Möglichkeiten und Gegebenheiten den Zugang zu einem Gebäude betrachtet, in einen entsprechenden Aufnahme/Leseschlitz eines Lesers eingeschoben, der daraufhin - nach ordnungsgemäßem Erkennen der Legitimität des Einlaßbegehrenden - die Tür öffnet oder den Öffnungsvorgang verweigert und gegebenenfalls eine Alarmgabe betätigt.

Solche Ausweiskarten müssen mindestens kundenspezifisch und mitarbeiterspezifisch codiert sein und können darüber hinaus noch eine Vielzahl von weiteren Informationen enthalten, damit der Zugang zu einem Gebäude zu dieser Zeit und an diesem Ort möglich ist.

Der entsprechende Leser ist dabei so ausgebildet, daß die Hell-Dunkelfeldverteilung beim Einziehen der Karte (dies geschieht entweder automatisch oder das Auslesen erfolgt aufgrund der von dem Benutzer selbst bewirkten Einschiebe- oder Entnahmebewegung) von entsprechend den Spuren der Hell-Dunkelfeldverteilung auf der Ausweiskarte angeordneten Leseköpfen erfaßt und die Abfolge der empfangenen Impulsdaten nach entsprechender Entschlüsselung ausgewertet wird. Ausführungsbeispiele eines solchen Lesers mit einer entsprechenden Kartenform lassen sich beispielsweise als bekannt den deutschen Patenten 27 47 076 und 28 43 462 entnehmen.

Der Erfindung liegt die Aufgabe zugrunde, bei solchen Lesern die Fälschungssicherheit drastisch zu erhöhen und insbesondere auch Verwechslungen mit anderen Systemen, die wiederum Anlaß zu Irrtümern und Fehlfunktionen geben können, zu vermeiden.

### Vorteile der Erfindung

Die Erfindung löst diese Aufgabe mit den Merkmalen des Anspruchs 1 bzw. des Anspruchs 6 und hat den Vorteil, daß nicht nur eine höhere Anzahl von Bitstellen aufgrund des hier verwendeten Dreispursystems zur Verfügung stehen, was eine größere Fälschungssicherheit bedeutet, sondern die auf der Karte befindlichen Daten auch derart verschlüsselt sind, daß eine Fälschung praktisch ausgeschlossen ist, natürlich bis auf die 1:1 Kopie-Anfertigung, die, wenn man im Besitz einer gegebenen Karte ist, mit den notwendigen Hilfsmitteln und Kenntnissen immer möglich ist.

Besonders bedeutsam und von Vorteil ist bei vorliegender Erfindung auch der Umstand, daß nicht nach einem einzigen Verschlüsselungsalgorithmus vorgegangen wird, sondern eine Vielzahl von Verschlüsselungsalgorithmen für die jeweilige Hell-Dunkelfeldverteilung auf einer gegebenen Ausweiskarte zur Verfügung stehen, die nach einem Zufallsprinzip ausgewählt werden, welches maschinenbestimmt ist und im übrigen auch nicht wiederholbar ist, so daß jeder anzufertigenden Karte ein nicht mehr rückzuverfolgendes Codierungsschema zugrunde liegt, welches im Bereich des Lesers nur dadurch entschlüsselt werden kann, daß dieser die Bitstelle mindestens eines einzigen Bits auf der Karte kennt, mit welchem auf den Codierungsalgorithmus einer sogenannten Zuordnungstabelle verwiesen wird, die dann im Bereich des Lesers aus einer Vielzahl vorhandenen Zuordnungstabellen unterschiedlichster Verschlüsselungsalgorithmen ausgewählt und der Entschlüsselung, also Dechiffrierung dieser jeweiligen einen Karte zugrunde gelegt wird. Nur auf diese Weise gelingt es, aus der vollkommen wirren, nicht decodierbaren Hell-Dunkelfeldabfolge der Karte eine sinnvolle Angabe wieder herzustellen.

Da aber weder die Schlüsselalgorithmen bekannt sind, also die Zuordnungstabellen noch der Umstand, welche der Zuordnungstabellen bei der jeweiligen Codierung einer gegebenen Ausweiskarte zugrunde gelegt worden sind, ist eine Entschlüsselung auf jeden Fall ausgeschlossen.

Die Fälschungssicherheit wird noch dadurch entscheidend erhöht, daß die Zuordnungstabellen, die jeweils einen gegebenen Verschlüsselungsalgorithmus enthalten, sich ausschließlich an einem Ort befinden, beispielsweise beim Kartenhersteller selbst, während die solche Ausweiskarten lediglich ausgebenden Stellen, auch im Bereich sogenannter Großkunden, lediglich eine Diskette mit den notwendigen Druckinformationen für eine vorgegebene Anzahl von Mitarbeiterausweiskarten, beispielsweise 10 oder 50.000 verschiedene, zu druckende Codiereinlagen erhalten, die nach einem Prinzip verschlüsselt und codiert sind, die weder die Karten ausgebende Stelle kennt noch im Bereich des Rechners bekannt ist, der die Diskette erstellt, da, wie erwähnt, lediglich eine einzige Codierbox existiert, die nach dem Zufallprinzip die Zuordnungstabellen auf Anforderung verteilt und entsprechende Informationen über die jeweiligen Codierungsschemata jeder einzelnen Karte an den Rechner oder PC übergibt, der daraus die Diskette herstellt, ohne selbst über die Entschlüsselungsalgorithmen zu verfügen.

Vorteilhaft ist ferner, daß auf diesem Weg noch eine Vielzahl anderer Verschlüsselungsmöglichkeiten zur Sicherheitserhöhung möglich sind - beispielsweise kann im Bereich des Rechners nochmals eine Verschlüsselung der ihm von der Codierbox übergebenen Codierungsschemata für die einzelnen Ausweise erfolgen, die dann zunächst über das Druckprogramm bei der jeweiligen, die Karten ausgebenden Stelle als erstes dechiffriert werden muß, um anschließend die jeweiligen Codierungseinlagen, also die Inletts für die damit jeweils zu versehenen Ausweiskarten herstellt.

Wo sich auf einer jeweiligen Ausweiskarte auf welcher Spur an welcher Bitstelle relevante Daten bezüglich Ausweisart, Ausweisversion, Mitarbeiternummer, Kartenkennung, Firma u. dgl. befinden und in welcher Verteilung, ist vollständig ungewiß und kann nur im Bereich des jeweiligen Lesers wieder zusammengesetzt werden, der auf eine der in ihm enthaltenen Zuordnungstabellen zurückgreift und aufgrund der dort gewonnenen Informationen sowie aus weiteren Schlüsselbits nicht nur die Auswertung der Datenspuren ermöglicht, sondern auch die Leserichtung der Zuordnungstabelle bestimmt, ob mit steigendem oder fallendem Index zu lesen ist bzw. wo sich in der Tabelle der Startpunkt für das Auslesen der Zuordnungstabelle befindet, die nur auf diese Weise ihrerseits den für das Auslesen und Dechiffrieren der jeweiligen Ausweiskarte erforderlichen Entschlüsselungsalgorithmus freigibt.

Die wesentlichen wichtigen Sicherheitsaspekte der erfindungsgemäßen Konzeption lassen sich daher wie folgt zusammenfassen:
- Die Codierbox oder das Codiergerät, welches eine Vielzahl von jeweils auszuwählenden Zuordnungstabellen (Entschlüsselungs- bzw. Verschlüsselungsalgorithmen) enthält, ist lediglich beim Hersteller der Karten selbst vorhanden, wobei eine Duplizierung einer solchen Codierbox nur durch eine Hardware-Kopierung möglich wäre, die wegen fehlender Zugänglichkeitsmöglichkeiten ausgeschlossen ist.
- Die zwischengeschaltete PC-Software kennt nur die ihr von der Codierbox vermittelte beispielsweise 54 Bit-Karteninformation einer Hell-Dunkelfeldverteilung sowie sonstige transparente Ausweisdaten, wobei die Verschlüsselung der Ausweisdaten im PC-Bereich nicht bekannt ist.
- Im PC-Bereich werden mittels der PC-Software Lizenzdisketten erstellt, die die jeweiligen Bit der Hell-Dunkelfeldverteilung der Karteninformation enthalten, wobei die Lizenzdisketten jedoch mit einem weiteren Verschlüsselungsprogramm geschrieben sind, so daß auf keinem der Datenträger die beispielsweise 54 Bit umfassende Ausweisinformation überhaupt vorhanden ist.
- Erst beim Kunden oder in einem entsprechenden Vertriebsbüro wird über das nur dort vorhandene Entschlüsselungsprogramm der Lizenzdisketten der Druck der erforderlichen Codeeinlagen für die Ausweiskarten möglich, so daß beim Kunden oder einem Vertriebsbüro dann auch die Karten hergestellt werden können, durch entsprechende Laminierung beispielsweise, wobei die genannten Codeeinlagen die Hell-Dunkelfeldverteilung der hier beispielsweise zugrunde gelegten drei Spuren umfassen, die Bestandteil eines jeweiligen Ausweises sind.
- Dabei ist ferner der Kartenleser mit seinem Entschlüsselungsprogramm für die ihm zugeführten Ausweise insofern zweigeteilt, als die Entschlüsselungsprogramme selbst nicht im PROM, sondern im Prozessor E²PROM abgelegt sind. Aufgrund der Ablage in E²PROM gelingt es auch nicht, zu dem Entschlüsselungscode zu gelangen, wenn der Kartenleser einer nicht legitimen Untersuchung unterworfen wird.
- Darüber hinaus arbeitet das Kartencodiergerät, welches die Codierschemata erstellt und im folgenden sowie bisher schon als Codierbox bezeichnet worden ist, nach einem beliebigen Zufallsprinzip, so daß praktisch jede Karte, auch für bestimmte vorgegebene Kunden vollständig unterschiedlich aufgebaut ist, obwohl sie dieselbe Information enthalten kann. Nach diesem gleichen Zufallsprinzip wird dann im Kartenleser die Karte wieder entschlüsselt.
- Da es schon eine Vielzahl von Lesern beliebiger Hersteller gibt, die nach dem üblichen Zweispurprinzip arbeiten, gelingt es durch die hier gewährleistete Erweiterung der Codierspuren um mindestens eine weitere Spur, zu einer wesentlichen Erhöhung der Fälschungssicherheit zu kommen, insbesondere auch deshalb, weil die Kompatibilität zu Fremdgeräten nicht mehr gegeben ist.
- Durch die Erfindung wird daher gewährleistet, daß die Codiereinlagen für die Erstellung der Ausweise nur an einigen Stellen überhaupt hergestellt werden können, wobei die dem Zufallprinzip unterworfene Codierbox selbst überhaupt nur beim Hersteller/Ausgeber einmal verfügbar ist und deren Anweisungen zur Codiereinlagenherstellung nur in einer weiteren verschlüsselten Form ergehen. Die heute weit verbreitete Erstellung von Infraroteinheitskarten mit Einheitscodierung (Zweispurcodierung) ist nicht mehr gegeben.

Ausgestaltungen der Erfindung sowie Weiterbildungen sind der nachfolgenden Beschreibung entnehmbar bzw. auch in Unteransprüchen aufgeführt.

Dabei ist noch besonders vorteilhaft, daß die einzelnen Bereiche der Verschlüsselung, also Kundencode, Mitarbeitercode, Ausweisversion u. dgl. auf der jeweiligen Ausweiskarte vollkommen und wirr ohne jeder logischen Abfolge untereinander vermischt sind und eine Dechiffrierung zu Fälschungszwecken unmöglich machen.

### Zeichnung

Ausführungsbeispiele der Erfindung sind in der Zeichnung dargestellt und werden in der nachfolgenden Beschreibung näher erläutert. Es zeigen:
- Fig. 1: lediglich zum besseren Verständnis in Draufsicht eine mögliche Organisationsform einer Dreispur-Ausweiskarte,
- Fig. 2: den Herstellungsablauf einer Ausweiskarte und damit gleichzeitig die Sicherheitsstufen, die in den Herstellungsablauf integriert sind, und

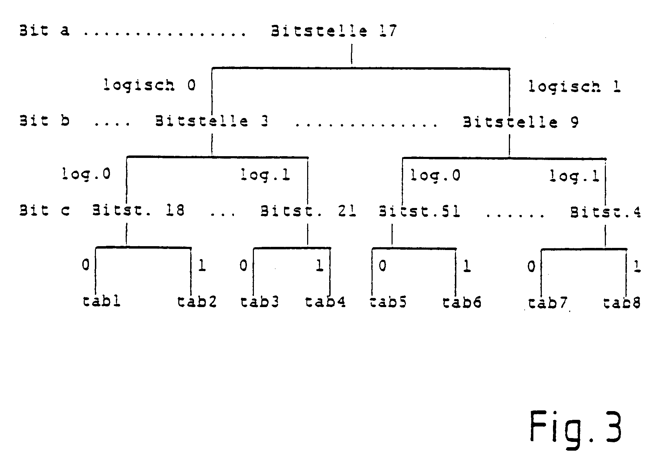

- Fig. 3: einen Entscheidungsbaum im Bereich eines jeweiligen Lesers, mit welchem dieser in die Lage versetzt ist, bei Angabe nur einer einzigen Bit-Stelle als Schlüsselbit für das Auffinden von Zuordnungstabellen eine bestimmte, nämlich die richtige Zuordnungstabelle aus der Vielzahl ihm zur Verfügung stehender Tabellen zur Dechiffrierung einer ganz bestimmten Karte auszuwählen.

### Beschreibung der Ausführungsbeispiele

Der Grundgedanke vorliegender Erfindung besteht darin, auf einer mindestens drei Spuren einer Hell-Dunkelfeldverteilung aufweisenden, bevorzugt mittels Infrarot ausgelesenen Ausweiskarte nach einem nach dem Zufallsprinzip bestimmten Algorithmus Daten unterzubringen, die insofern keiner logischen Abfolge mehr gehorchen und eine Entschlüsselung durch Unbefugte praktisch unmöglich machen, da der Verschlüßler nur ein einziges Mal existiert und - in einer bevorzugten Ausgestaltung - lediglich ein einziges Schlüsselbit auf der Karte an einer vorher bestimmten Stelle unterzubringen hat, um auf diese Weise einen entsprechenden Leser in die Lage zu versetzen, die Karte unter verschiedensten Gesichtspunkten auszulesen und zu dechiffrieren.

Da es auf diese Weise, um nur ein Beispiel anzuführen, möglich ist, je nach der Anzahl entsprechende Verschlüsselungsalgorithmen enthaltender Zuordnungstabellen eine beliebige Anzahl unterschiedlichster Ausweise, bei 8 Zuordnungscabellen beispielsweise 64 Ausweise, für ein und denselben Mitarbeiter zu generieren, die ein und dieselbe Information enthalten, ist es für einen Kartenfälscher nahezu unmöglich, aus mehreren Ausweisen mit zugehörigen Mitarbeiternummern und Systemcode den Codieralgorithmus herauszufinden, eben weil es durch die hier zugrunde gelegte Verschlüsselungstechnik eine nichtbegrenzte Anzahl verschiedener Kartencodiermöglichkeiten gibt, die bei Vorhandensein von beispielsweise 8 Verschlüsselungsalgorithmen allein, wie soeben erwähnt, zu 64 verschiedenen Kartencodiermöglichkeiten führt.

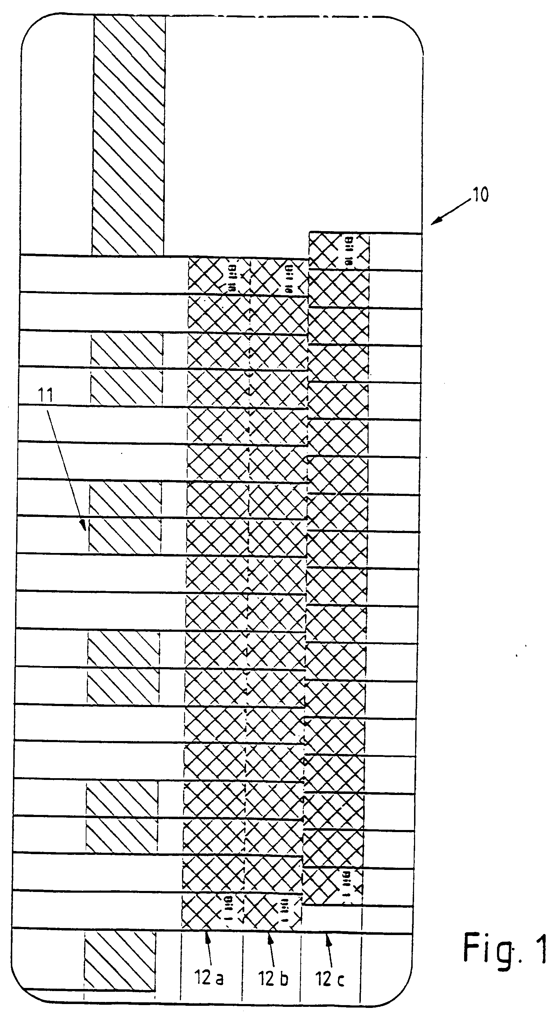

Entsprechend Fig. 1 verfügt eine beliebige Ausweiskarte über eine Taktspur 11 und mindestens, vorzugsweise aber auch nur über drei Datenspuren 12a, 12b und 12c, die jeweils 18 Datenbit aufweisen, in einer entsprechenden Hell-Dunkelcodierungs-Abfolge, die in der Karte der Fig. 1 nicht dargestellt ist.

Es stehen also insgesamt 54 Bit Daten zur Verfügung, die auf dieser 3-Spurkarte untergebracht sind, wobei es sich versteht, daß sowohl diese numerischen Datenangaben als auch sämtliche nachfolgenden Datenangaben lediglich dem besseren Verständnis dienen und die Erfindung weder einschränken noch auf dieses spezielle Ausführungsbeispiel als reales Codierungsmuster beschränken und spezifizieren.

Geht man aber von einer solchen 3-Spurkarte zunächst aus, dann ergibt sich die Notwendigkeit, in diesen 54 Bit Daten eine Vielzahl von nichtentschlüsselbaren Informationen unterzubringen, die, auch hier lediglich nur beispielsweise genannt, folgende Angaben umfassen sollten:
- Mitarbeiterausweisnummer
- Kundencode
- Versionsnummer
- Ausweisart
- Tabellenzuordnungsdaten
- Parity-Bits
um hier nur einige Daten, Nutzinformationen u.dgl. zu nennen, die in den hier drei Spuren der Karte verschlüsselt niedergelegt sind.

Dabei kann es sich bei der Karte oder dem Ausweis selbst um jeden beliebigen Schlüssel, Zugangskontrolle, Identitätsausweis u.dgl. handeln, also Personalausweis, Kreditkarten, Zugangsschlüssel in Kartenform, Ausweise beliebiger Art u.dgl.

Die Grundkonstellation ist also so, daß eine beispielsweise die angegebenen Datenmöglichkeiten verschlüsselt aufweisende Karte hergestellt und einem Träger übereignet wird, der mit dieser Karte in die Lage versetzt wird, bei einem (Infrarot)Leser nach Prüfung der Karte auf Richtigkeit Zugang beispielsweise zu einem Gebäude zu erhalten, wobei der Kartenleser über entsprechende Leseköpfe in der Anordnung verfügt, daß die Datenspuren 12a, 12b, 12c auf der Karte bei deren Einschieben oder Herausziehen - hier kommt auch ein maschineller Einzug in Frage - ausgelesen werden können, gesteuert von der parallel hierzu vorgesehenen Taktspur 11.

Durch die im folgenden erläuterte Verschlüsselung (über mehrere Stufen, falls gewünscht) wird zuverlässig jede Art einer Fremdkartenherstellung unterbunden und die Kartenfälschungssicherheit drastisch, nämlich bis zur Unmöglichkeit, solche Karten zu fälschen, erhöht.

Dabei wird wie folgt vorgegangen. Zur Verschlüsselung werden eine Vielzahl von unterschiedlichen Verschlüsselungsalgorithmen zugrunde gelegt, die im folgenden als sogenannte Zuordnungstabellen erfaßt und bezeichnet werden und von denen beispielsweise acht mögliche Zuordnungstabellen bei einem realen Ausführungsbeispiel vorhanden sind.

Diese Zuordnungstabellen geben für jeden Bit der 54 Bit jeder Karte an, um was für ein Bit es sich handelt, d.h. eine bestimmte Zuordnungstabelle X enthält z.B. die Angabe:
- bei Bit 1 in Spur 12a handelt es sich um Mitarbeiterausweis mit der Wertigkeit 2⁵,
- bei Bit 17 der zweiten Spur handelt es sich um den Kundencode mit Wertigkeit 2⁰
und so fort, wobei eine Vielzahl solcher Zuordnungstabellen vorhanden sind, praktisch also beispielsweise 8, die für sämtliche 54 Bit des 3-Spursystems genaue Angaben machen, an welcher Bitstelle welche Bitart mit welcher Wertigkeit zu identifizieren ist.

So kann sich beispielsweise bei einer beliebigen Tabelle, etwa der Tabelle Nr. 7 ein folgendes Codierschema ergeben, welches im folgenden beispielsweise zum Teil nur angedeutet ist:

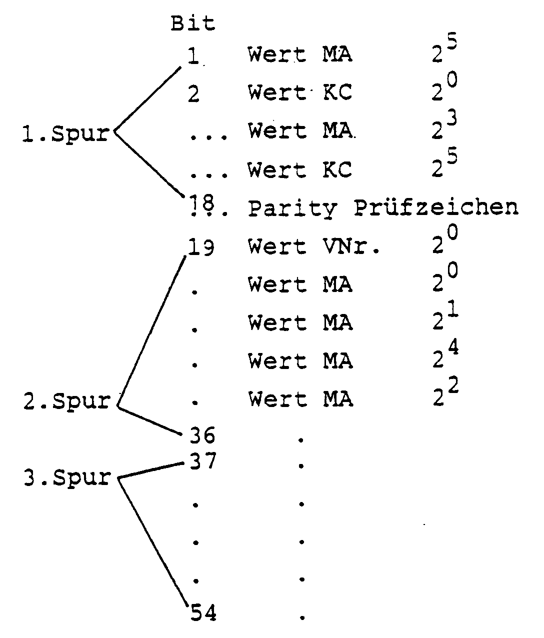

Man erkennt, daß die Bitstellen je nach Verschlüsselungsalgorithmus vollkommen wirr und nach einem Zufallsprinzip verteilt bei dieser Tabelle sich auf eine Mitarbeiternummer (MA), auf eine Kundencodeangabe (KC), auf Parity-Bits u.dgl. beziehen, die dann jeweils nach entsprechender Hell-Dunkelfeldverteilung auszulesen, also vom Leser auszuwerten oder nicht auszuwerten sind.

Geht man von der obigen kurz angedeuteten Möglichkeit der Tabelle 7 aus, dann ergeben sich für die Mitarbeiternummer Datenbits an vollkommen verschiedenen Positionen, die aber aus dieser Tabelle identifizierbar sind, wie folgt: 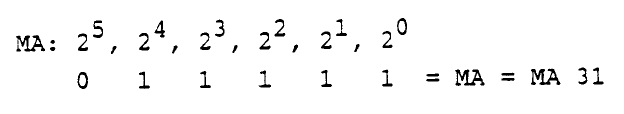 wobei davon ausgegangen wird, daß hier lediglich das erste Bit der ersten Spur ein helles Feld (= logisch 0) und alle anderen Bitstellen in dieser Verteilung entsprechend Tabelle 7 dunkle Felder umfassen, so daß sich aus den darunter befindlichen Angaben für die Mitarbeiternummer die Zahl 31 ergibt.

Natürlich werden die jeweiligen Bitpositionen und die Wertigkeiten bei jeder zugrunde gelegten Zuordnungstabelle, also bei jedem Verschlüsselungsalgorithmus unterschiedlich sein, und das soeben angegebene Ausführungsbeispiel dient lediglich zum besseren Verständnis der Codierungsmöglichkeiten, wobei sich noch folgendes ergibt:

Die hier zugrunde gelegten beispielsweise acht Zuordnungstabellen oder unterschiedlichen 8 Verschlüsselungsalgorithmen sind ausschließlich in einem einzigen Kartencodiergerät vorhanden, welches von einem PC (des Hersteller/Karten ausgebenden Stelle) angesteuert wird.

Dieses Kartencodiergerät würfelt dann sozusagen mit sich selbst, d.h. ein eingebauter Zufallsgenerator zeigt auf eine der Zuordnungstabellen, die dann für die nächste Anfrage einer Mitarbeiternummer für eine herzustellende Karte der Hell-Dunkelfeldverteilung der 3-Spurkarte zugrunde gelegt wird. Von einem PC oder einem sonstigen Rechner wird also dem nur einmal vorhandenen Kartencodiergerät zusammen mit der Anfrage zur Erstellung eines neuen Codierschemas für eine Karteneinlage Information über die Nummer des Mitarbeiters, den Kundencode u.dgl. zugeführt und das im folgenden kurz als Codierbox bezeichnete Kartencodiergerät gibt eine Anweisung für die Hell-Dunkelfeldverteilung dieser betreffenden Karte aus, die so wie weiter oben angegeben aufgebaut sein kann, wobei eben eine dieser 8 Verschlüsselungsalgorithmen zugrunde gelegt wird, die der Codierbox - natürlich nur bei diesem gedachten Ausführungsbeispiel - zur Verfügung stehen.

Andererseits befinden sich diese 8 Verschlüsselungsalgorithmen auch in jedem Leser an geeigneter Stelle, nämlich in dessen Prozessor-E²PROM, so daß die Codierbox - nach Vereinbarung - dem Leser natürlich auch mitteilen muß, und zwar durch eine entsprechende Verschlüsselung auf der Karte, die als sogenannte Schlüsselbits bezeichnet werden, unter Zugrundelegung welches Verschlüsselungsalgorithmus der Leser die ihm jeweils zugeführte Karte oder Ausweis dechiffrieren muß.

Dies kann wie folgt geschehen. Vereinbart man die Existenz von lediglich 8 Verschlüsselungsalgorithmen, dann benötigt man, wie bekannt, beispielsweise drei verschiedene Bits auf der jeweiligen Karte oder dem Ausweis, um auf die entsprechende Zuordnungstabelle verweisen zu können - hier kann im übrigen ein Entscheidungsbaum im Bereich jedes Lesers zugrunde gelegt werden, wie er im folgenden angegeben ist und wodurch es der Verschlüsselung ermöglicht wird, lediglich eine einzige Bitscelle auf der Karte als Anfangsbit für die Ermittlung des Zeigers zugrunde zu legen, der auf die entsprechende Zuordnungstabelle verweist.

Es sei davon ausgegangen, daß für die Auswahl einer Zuordnungstabelle (1 aus 8) 3 Schlüsselbits a, b und c ausgewählt und auf der Karte vorhanden sind. Dabei braucht für das Codier- und Decodiersystem lediglich die Stelle bekannt zu sein, auf der sich der Anfangsbit auf der 3-Spurkarte befindet, der angenommener- und vereinbarterweise die Bitstelle 17 (in Spur 1) einnimmt. Eine solche Festlegung reicht aus, um sowohl die Bitstelle als auch die Wertigkeit der weiteren Schlüsselbits b und c zu bestimmen, wie der nachfolgende Entscheidungsbaum erkennen läßt. 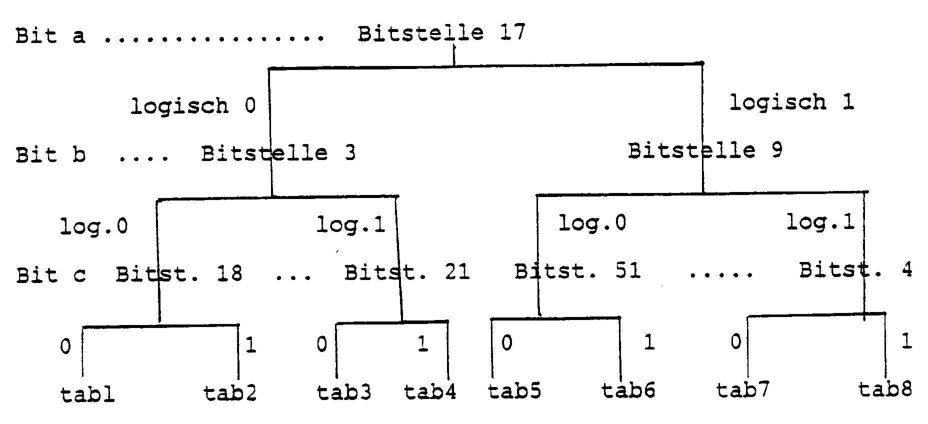 (tabl, tab2 bis tab8 sind Zeiger auf die entsprechenden Zuordnungstabellen.)

Der Vorgang ist also so, daß je nachdem, ob die Anfangs-Schlüsselbitstelle 17 eine logische 0 oder eine logische 1 zeigt, hierdurch automatisch abgeklärt wird, ob die Bitstelle 3 oder die Bitstelle 9 die nächste Position für das zweite Schlüsselbit b bildet; auch hier gibt es dann wieder eine Verteilung, so daß letzten Endes auf eine der Zuordnungstabellen 1 bis 8 verwiesen werden kann.

Diese grafische Darstellung verdeutlicht, daß sich aus dem logischen Wert des Schlüsselbits a, b und c nicht nur die Stelle der beiden weiteren Schlüsselbits b und c ergibt, sondern letzten Endes auch die jeweils zugrunde gelegte Zuordnungstabelle. Daher ist ein solcher Entscheidungsbaum im Codier- und Decodiersystem implementiert.

Demnach weiß jeder Leser, dem eine Ausweiskarte zugeführt wird, welchen Entschlüsselungsalgorithmus er zugrunde zu legen hat, um die Karte auszulesen und entsprechend dechiffrierte Daten an nachgeschaltete Systemstellen zu übersenden, die dann über die Ordnungsmäßigkeit eines Zugangs o.dgl. entscheiden.

Natürlich können die in diesem Falle 54 Bit für eine 3-Spurkarte auch in anderer Verteilung angeordnet werden, beispielsweise:
42 Bits für Nutzdaten, wobei eine solche Zusammensetzung die Mitarbeiternummer, den Systemcode, Kundennummer u.dgl. umfaßt; insgesamt 6 Bits als Schlüsselbit, wovon soeben die drei ersten Schlüsselbits a, b und c schon erläutert und verbraucht worden sind als Verweisung auf eine jeweilige Zuordnungstabelle und insgesamt
6 Bits für Datensicherheit zugrunde gelegt werden, wobei beispielsweise so vorgegangen werden kann, daß in den 42 Bits Nutzdaten und den 6 Bits der Schlüssel die Anzahl der Nullen gezählt und in diesen 6 Bits abgelegt werden.

Eine Zuordnung eines Nutzdatenbits zu einer bestimmten Stelle auf der 3-Spurkarte ist durch eine solche Verschlüsselung nicht mehr möglich.

Im übrigen kann darauf hingewiesen werden, daß die Zuordnungstabellen lediglich 51 Bytes umfassen müssen, da 3 Bits der Karte als Schlüsselbits, die auf eine jeweilige Zuordnungstabelle zeigen, schon verbraucht sind und daher lediglich noch 51 Bits der Karte durch die 51 Bytes jeder Zuordnungstabelle dechiffriert zu werden brauchen.

Sind insgesamt 6 Bits als Schlüsselbits vorgesehen, dann können weitere 3 Schlüsselbits x, y und z wie folgt für weitere Verschlüsselungsmaßnahmen verwendet werden.

So kann das x-Bit die Leserichtung der Zuordnungstabelle angeben - Bit x = 1 bedeutet, daß die entsprechende Zuordnungstabelle mit steigendem Index gelesen und Bit x = 0 bedeutet, daß die Tabelle mit fallendem Index gelesen wird. Über die Wertigkeit von y und z wird eine weitere Auswerttabelle interpretiert, die wie folgt aufgebaut sein kann:

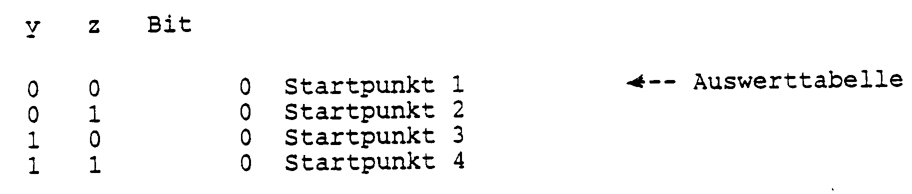

Die Startpunkte 1 und 4 bestimmen Stellen innerhalb einer jeweiligen Zuordnungstabelle, an welcher diese beginnend ausgelesen wird für den Bit-Wertebereich 1 bis 48, da die 3 Einträge für die Schlüsselbits x, y und z nicht mehr einbezogen werden, da diese schon ausgewertet sind.

Der Basiszeiger der Zuordnungstabelle wird somit um 3 erhöht und der Startpunkt dazu addiert, um die Adresse zu erhalten, an welcher beginnend die Tabelle ausgelesen wird.

Aus den durch das x-Bit bestimmten zwei verschiedenen Leserichtungen und den 4 Startpunkten ergeben sich 8 Möglichkeiten, um jede Zuordnungstabelle auszulesen - bei Zugrundelegung von insgesamt 8 möglichen Zuordnungstabellen (alle diese Angaben sind immer nur als Beispiele zu verstehen) ergeben sich also die 64 weiter vorn angesprochenen Möglichkeiten, wie die gleichen Angaben für eine einzige Ausweiskarte unterschiedlich in den Hell-Dunkelfeldverteilungen des 3-Spursystems verschlüsselt werden können.

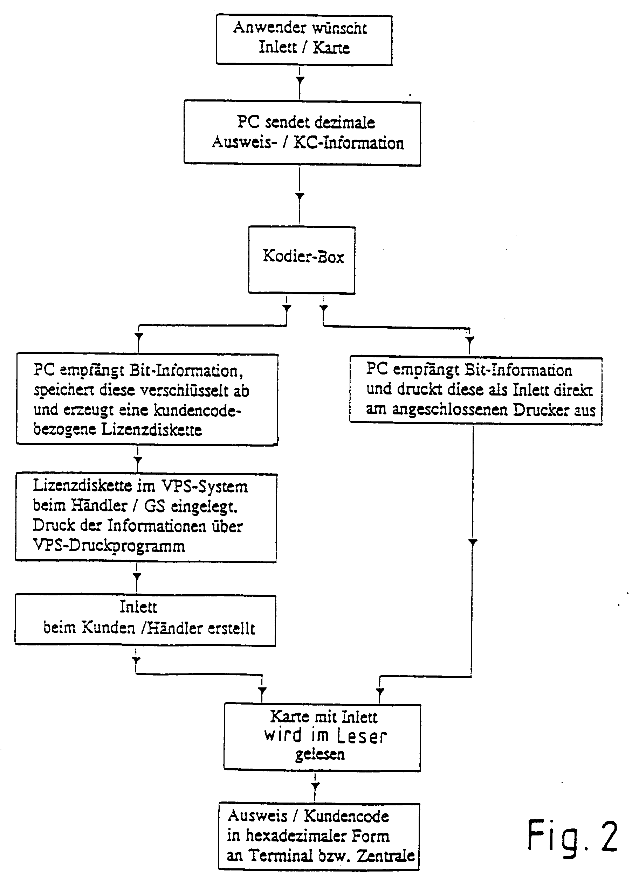

Betrachtet man die Fig. 2, dann ergibt sich folgendes: Sobald entsprechend I eine Karte oder ein Inlett(Codiereinlage) für eine Ausweiskarte gewünscht wird, werden einem Rechner oder PC entsprechende (dezimale) Angaben über Ausweis- und Kundencodeinformationen zugeführt, die auch alle anderen Daten umfassen, von denen eine Angabe auf der Karte bei entsprechender Verschlüsselung erwünscht sind.

Der PC übergibt diese Daten dann entsprechend III der Codierbox, die diese Daten vollkommen willkürlich unter Zugrundelegung eines Zufallsgenerators bei Auswahl einer entsprechenden Zuordnungstabelle verarbeitet und eine Bit-Information erstellt, die im Grunde einer Hell-Dunkelfeldverteilung von 3 Spuren auf einer Karte entspricht.

Es ist nun möglich, entsprechend der Verzweigung, daß bei der Ausgabe geringere Mengen von Ausweisen diese sozusagen direkt ab Werk vollständig erstellt werden unter Zugrundelegung der jeweiligen Kundendaten, d.h. entsprechend IV gelangen die verschiedenen Codierschemata für die gewünschte Anzahl von Ausweiskarten direkt wieder zum PC, der unter Zugrundelegung eines entsprechenden Druckprogramms die jeweiligen Codiereinlagen direkt mit Hilfe eines angeschlossenen Druckers ausdruckt.

Die Codiereinlagen werden dann einem entsprechenden Kartenrohling zugeführt, der aus geeigneten Schichten eines thermoplastischen Kunststoffmaterials besteht bzw. zusammengesetzt ist; die Schichten einschließlich der Codiereinlage (Inlett) werden laminiert, und die fertige Karte, die beispielsweise die Ausweisnummer des jeweiligen Mitarbeiters durchaus in Klarschrift aufgedruckt tragen kann, wird an den jeweiligen Benutzer verteilt; das Auslesen der Karte geschieht dann entsprechend V in einem Leser, der, da er die Position des Anfangs-Schlüsselbits kennt, diese Karte unter Zugrundelegung des entsprechenden Verschlüsselungsalgorithmus wieder auslesen kann und die gewonnenen Daten des Ausweises in entsprechender (hexadezimaler) Form einem Terminal bzw. einer Zentrale zuführt.

Bei größeren Mengen herzustellender Karten können diese aber auch bei der jeweiligen kartenausgebenden Stelle, also einem Großkunden beispielsweise selbst hergestellt werden, wobei jedoch zur Aufrechterhaltung des bei der Erfindung zugrunde liegenden Sicherheitsschemas die Codierbox entsprechend III nicht zum Kunden gelangt, sondern diesem vom PC entsprechend IV' lediglich eine kundencodebezogene Lizenzdiskette übergeben wird, die gespeichert die vom PC von der Codierbox empfangenen Bitinformationen enthält, allerdings verschlüsselt nach einem beliebigen weiteren Verschlüsselungsprogramm. Der Kunde verfügt über ein Druckprogramm, welches aus dieser Lizenzdiskette wieder die gewünschte Hell-Dunkelfeldverteilung für die Karteninletts herstellt, wobei es das Software-Druckprogramm ist, welches die erneut verschlüsselten Bitinformationen der Lizenzdiskette zunächst dechiffriert und anschließend die Karteninletts ausdruckt. Ferner ist ein wesentlicher Aspekt noch darin zu sehen, daß der PC selbst natürlich nicht die Chiffrier- und Dechiffriertabellen der Codierbox bzw. des Lesers kennt, wobei im übrigen auch solche Karten nicht von anderen Lesern ausgelesen werden können, weil diese nicht über die Zuordnungstabellen verfügen und daher auch gar nicht in der Lage sind, die Hell-Dunkelfeldverteilung ihnen zugeführter Ausweiskarten zu dechiffrieren.

Die dem Kunden übergebenen Lizenzdisketten enthalten natürlich nicht die Zuordnungstabellen und enthalten im übrigen wie soeben erwähnt, die aus der Codierbox stammende Bitinformation auch nur in verschlüsselter Form.

Es versteht sich, daß hier noch eine Vielzahl anderer Verschlüsselungen und Überverschlüsselungen möglich sind, auf die aus Gründen der Klarheit nicht weiter eingegangen wird.

So ist es natürlich möglich, wenn man anstelle von lediglich 3 Schlüsselbits 4 Schlüsselbits zugrunde legt, hier anstelle der 8 Zuordnungstabellen deren 16 zu verwenden, wie es überhaupt möglich ist, durch entsprechende Änderungen auch wieder andere Zuordnungstabellen hinzuzufügen oder bestehende zu verändern, wobei zum Beispiel lediglich der E²PROM bei den Lesern ausgetauscht oder entsprechend umprogrammiert zu werden braucht.

## Patentansprüche

1. Verfahren zur Herstellung von durch eine mittels eines Lesers, insbesondere eines Infrarotlesers, lesbaren in Spuren angeordneten Hell-Dunkelfeldverteilung codierten Ausweiskarten, dadurch gekenn-zeichnet, daß
a) eine vorgegebene Anzahl von Bitstellen einer mindestens 3 Spuren aufweisenden Karte als Schlüsselbits festgelegt werden, von denen mindestens einige auf
b) eine aus einer vorgegebenen Anzahl von jeweils einen Verschlüsselungsalgorithmus enthaltenden Zuordnungstabellen verweisen, die sämtlich sowohl im jeweiligen Leser niedergelegt sind zur Ermöglichung der Dechiffrierung der Lesespuren der Karte als auch
C) ausschließlich bei der Herstellung der jeweiligen Codierschemata für die Karten innerhalb eines Kartencodiergeräts angeordnet sind und dort auf Anfrage nach dem Zufallsprinzip ausgewählt werden als Grundlage für die Bestimmung der Hell-Dunkelfeldverteilung einer jeweiligen Karte.

2. Verfahren nach Anspruch 1, dadurch gekennzeichnet, daß das für eine vorgegebene Ausweisnummer erstellte Codeschema direkt an einen die Druckvorlage der Codeeinlage für die Karte steuernden Rechner oder PC gelangt oder mit anderen Codeschemata zusätzlicher Karten auf einer Diskette gespeichert wird, wobei für die verschiedenen Codeschemata jeweils unterschiedliche, nach dem Zufallsprinzip ausgewählte Verschlüsselungs-/Entschlüsselungsalgorithmen repräsentativ sind.

3. Verfahren nach Anspruch 2, dadurch gekennzeichnet, daß bei Speicherung kundenbezogener Bitinformationen auf einer Diskette die Disketteninformationen einer erneuten Verschlüsselung unterworfen sind, die durch das Software-Druckprogramm bei der Herstellung der Codierschemata als erstes entschlüsselt wird.

4. Verfahren nach einem der Ansprüche 1 bis 3, dadurch gekennzeichnet, daß eine vorgegebene Anzahl von Schlüsselbits verwendet wird, um auf eine aus einer Vielzahl von nach dem Zufallsprinzip ermittelten Zuordnungstabellen beim Auslesen einer entsprechend codierten Karte zu zeigen, und daß weitere Schlüsselbits auf der Karte vorhanden sind, die die Leserichtung sowie unterschiedliche Startpunkte der jeweils ausgewählten Verschlüsselungs-/Entschlüsselungsalgorithmen im Leser bestimmen.

5. Verfahren nach einem der Ansprüche 1 bis 4, dadurch gekennzeichnet, daß durch die Bestimmung eines Anfangsschlüsselbits und durch dessen Wertigkeit jeweils die Positionen nachfolgender Schlüsselbits mittels eines Entscheidungsbaums im Leser ermittelt werden.

6. Vorrichtung zur Herstellung von durch eine mittels eines Lesers, insbesondere eines Infrarotlesers, lesbaren, in Spuren angeordneten Hell-Dunkelfeldverteilung codierten Ausweiskarten, zur Durchführung des Verfahrens nach einem oder mehreren der Ansprüche 1 bis 5, dadurch gekennzeichnet, daß eine eine vorgegebene Anzahl von jeweils Verschlüsselungsalgorithmen repräsentierenden Zuordnungstabellen enthaltende Codierbox vorgesehen ist, die bei Anforderung nach dem Zufallsprinzip einen Verschlüsselungsalgorithmus zugrunde legt, ihr zugeführte Ausweis/Kundeninformationen entsprechend verschlüsselt, und in den von ihr erstellten Bitinformationen durch Schlüsselbits eine entsprechende Zuordnungstabelle markiert, die den gleichen Verschlüsselungsalgorithmen in Form von Zuordnungstabellen einer beliebigen Anzahl von Ausweislesern zur Entschlüsselung zugeführter zu lesender Karten entspricht.

7. Nach dem Verfahren nach einem oder mehreren der Ansprüche 1 bis 5 hergestellte Ausweiskarte, gekennzeichnet durch eine vorgegebene Anzahl von Schlüsselbits (a, b, c; x, y, z), die auf 3 Datenspuren (12a, 12b, 12c) der Karte verteilt sind und die auf eine bestimmte, einen vorgegebenen Verschlüsselungsalgorithmus enthaltende Zuordnungstabelle aus einer Vielzahl solcher Tabellen hinweisen, derart, daß ein entsprechender Leser, insbesondere ein Infrarotleser, in die Lage versetzt wird, aufgrund mindestens eines Anfangsschlüsselbits auf die der Entschlüsselung dienende, bei ihm gespeicherte Zuordnungstabelle zu zeigen.

## Claims

1. A process for manufacturing identity cards coded by a light/dark field distribution which is arranged in tracks and may be read by means of a reader, in particular an infrared reader, characterized in that
a) a preset number of bit positions of a card having at least 3 tracks are set as key bits of which at least some
b) refer to one of a preset number of cross-reference tables which contain in each case one encoding algorithm, are all deposited in the respective reader for enabling the read tracks of the card to be deciphered and are also
c) arranged in a card coding device exclusively during production of the respective coding patterns for the cards and are selected there at random on request as the basis for determining the light/dark field distribution of a particular card.

2. A process according to Claim 1, characterized in that the code pattern which is created for a preset identity number arrives directly at a computer or PC controlling the artwork of the code insert for the card, or is stored on a floppy disk with other code patterns of additional cards, in each case different randomly selected encoding/decoding algorithms being representative of the various code patterns.

3. A process according to Claim 2, characterized in that, when storing customer-related bit information on a floppy disk, the floppy-disk information undergoes new encoding which is the first to be decoded by the printing program software when the code patterns are produced.

4. A process according to one of Claims 1 to 3, characterized in that a preset number of key bits are used to indicate one of a plurality of randomly determined cross-reference tables when reading out a correspondingly coded card, and in that there are further key bits on the card which designate both the reading direction and different starting points of those encoding/decoding algorithms in the reader which are selected in each case.

5. A process according to one of Claims 1 to 4, characterized in that, by designating an initial key bit and as a result of its significance, the positions of subsequent key bits are determined in each case by means of a decision tree in the reader.

6. A device for manufacturing identity cards coded by a light/dark field distribution which is arranged in tracks and may be read by means of a reader, in particular an infrared reader, for carrying out the process according to one or more of Claims 1 to 5, characterized in that there is provided a coding box which contains a preset number of cross-reference tables, each representing an encoding algorithm, picks out an encoding algorithm at random on request, correspondingly encodes its given identity/customer information and, in the bit information which it creates, uses key bits to mark a corresponding cross-reference table corresponding to the same encoding algorithms in the form of cross-reference tables of any number of identity readers for decoding cards which are supplied to be read.

7. An identity card manufactured according to the process according to one or more of Claims 1 to 5, characterized by a preset number of key bits (a, b, c; x, y, z) which are distributed on 3 data tracks (12a, 12b, 12c) of the card and refer to one particular cross-reference table of a plurality such tables which contains a preset encoding algorithm, such that, as a result of at least one initial key bit, a corresponding reader, in particular an infrared reader, is in the position to indicate that cross-reference table stored therein which serves for decoding.

## Revendications

1. Procédé de fabrication de cartes d'identité codées par la distribution des traces claires et foncées à l'aide d'un lecteur, notamment d'un lecteur à infrarouge,
caractérisé en ce que
a) on fixe comme bits de codage un nombre prédéterminé de positions de bits d'une carte ayant au moins 3 pistes parmi lesquels au moins certains,
b) se rapportent à l'un des tableaux de concordance d'un nombre prédéterminé de tableaux de concordance contenant chaque fois un algorithme de codage, ces tableaux étant tous aussi bien enregistrés dans chaque lecteur respectif pour permettre de déchiffrer les pistes de lecture de la carte,
c) que prévus exclusivement à l'intérieur d'un appareil de codage de cartes lors de la fabrication des schémas de codage respectifs des cartes, et sélectionnés à la demande selon le principe du choix aléatoire, comme base pour déterminer la distribution des traces claires et sombres d'une carte respective.

2. Procédé selon la revendication 1,
caractérisé en ce que
• le schéma de codage établi pour un numéro de carte d'identité prédéterminé arrive directement à un calculateur ou PC commandant le modèle d'impression de l'insert de codage de la carte ou est enregistré sur une disquette avec d'autres schémas de codage de cartes supplémentaires,
• et différents algorithmes de codage/décodage choisis selon le principe du choix aléatoire sont représentatifs des différents schémas de codage.

3. Procédé selon la revendication 2,
caractérisé en ce qu'
à l'enregistrement d'informations de bits rapporté à un client sur une disquette, on soumet les informations de la disquette à un nouveau codage gui est décodé en premier lieu par le programme d'impression lors de la fabrication des schémas de codage.

4. Procédé selon l'une quelconque des revendications 1 à 3,
caractérisé en ce qu'
• on utilise un nombre prédéterminé de bits de codage pour se reporter à l'un des nombreux tableaux de concordance établis selon le principe du choix aléatoire, pour la lecture d'une carte codée correspondante et,
• d'autres bits de codage sur la carte définissent dans le lecteur, le sens de lecture ainsi que différents points de départ des algorithmes de codage/décodage chaque fois sélectionnés.

5. Procédé selon l'une quelconque des revendications 1 à 4,
caractérisé en ce que
par la détermination d'un bit de codage initial et sa pondération, on détermine chaque fois les positions des bits de codage suivants à l'aide d'une arborescence de décisions dans le lecteur.

6. Dispositif pour fabriquer des cartes d'identité codées par la distribution de traces chaires et foncées à l'aide d'un lecteur notamment d'un lecteur à infrarouge, pour la mise en oeuvre du procédé selon l'une ou plusieurs des revendications 1 à 5,
caractérisé par
• une boîte de codage contenant un nombre prédéterminé de tableaux de concordance représentant chaque fois des algorithmes de codage,
• qui fournit un algorithme de codage à la demande et selon le principe du choix aléatoire, qui code de façon correspondante les informations de client/de carte d'identité qu'elle reçoit et qui assure le marquage d'un tableau de concordance correspondant par un bit de codage dans les informations de bit qu'elle établit,
• ce tableau de concordance correspondant aux mêmes algorithmes de codage sous la forme de tableaux de concordance d'un nombre quelconque de lecteurs de cartes d'identité pour le décodage de cartes fournies en lecture.

7. Carte d'identité fabriquée selon le procédé de l'une ou plusieurs des revendications 1 à 6,
caractérisée par
un nombre prédéterminé de bits de codage (a, b, c, ; x, y, z) distribués sur trois pistes de données (12a, 12b, 12c) de la carte et qui se réfèrent à un tableau de concordance défini contenant un algorithme de codage prédéterminé, ce tableau appartenant à un ensemble d'un grand nombre de tels tableaux, de façon qu'un lecteur correspondant, notamment un lecteur à infrarouge, soit en mesure, à partir d'au moins un bit de codage initial, de se référer au tableau de concordance qu'il contient et servant au décodage.
